# EUROPEAN PATENT APPLICATION

(11) **EP 4 064 601 A1**
(43) Date of publication of application: **28.09.2022**
(21) Application number: 21200123.4
(22) Date of filing: 30.09.2021
(51) Int. Cl.: H04L 5/00

(54) **METHOD AND SYSTEM FOR PROVIDING CONTINUOUS SLOT IN UNLICENSED BAND OF RADIO SLOTS**

(30) Priority: 26.03.2021 IN 202111013560
(71) Applicant: Sterlite Technologies Limited, Haryana 122002 (IN)
(72) Inventor: KUMAR, Nitesh, 122002 Haryana (IN); GANGADHAR, Rajesh, 122002 Haryana (IN)
(74) Representative: Hepworth Browne

(57) **Abstract**

The present disclosure relates to a method for providing a contiguous slot in an unlicensed band of radio slots by a cloud intelligence engine (202) including steps of selecting a plurality of non-contiguous slots in the unlicensed band of radio slots, determining an interference score for each of the plurality of non-contiguous slots, creating the contiguous slot by combining at least two non-contiguous slots based on the determined interference score and allocating at least combined two non-contiguous slots from the plurality of non-contiguous slots as the contiguous slot.

## Description

### TECHNICAL FIELD

Embodiments of the present disclosure relate to the field of communication system, and in particular, relates to a system for providing a contiguous slot in an unlicensed band of radio slots and method thereof.

### Background Art

Wireless communication networking has become a backbone of today's portable modern world. Over the past few decades, deployment of wireless communication networks has increased dramatically. The wireless communication networks enable users to have access to various services such as voice-based services, video services, messaging services, broadcasting services, and the like. Currently, the wireless communication networks face multiple challenges and consistent efforts are being made to resolve them. Some of these challenges include management of wireless communication networks in an inefficient way, limited spectrum problem, bounced signals, interference of co-channels, wireless fidelity interference, changing conditions, and the like. One of the problems faced most consistently by wireless network operators is the interference problem. Multiple researches have been done and techniques have been designed to find the best interference free channel. Further, separately there have been multiple Wi-Fi radio chipset hardware models which could combine the channel as instructed but none of these have any solution to provide a complete solution in a wireless ecosystem. In an example, Cisco Meraki Enterprise-class 802.11ac Aps with hardware model MR53 and Ruckus wireless, ChannelFly model are used for finding the best interference free channel. Similarly, a wireless network operating in the same or similar one or more unlicensed bands have to suffer traffic or congestion and one or more unreliable connection issues that create problems for existing wireless network sharing at the same channel.

In this era of rising deployment of the wireless communication networks, interference in unlicensed (i.e., Ultra Broadband Radio (UBR)) bands (such as 2.4 GHz and 5.8 GHz) has taken a toll. The interference degrades performance of the wireless communication networks at all levels. Throughput becomes about one-fifth due to interference in the wireless communication networks. The interference in the wireless communication networks leads to frustrating customer experience, dropped connection, operational in-efficiencies, higher field visits, and higher operational expenditure (OPEX).

Currently, the wireless network operators are either purchasing expensive licensed band or deploying even more costly fibre links with below 100 Mbps capacity. On the other hand, the wireless network operators want higher throughput in the wireless communication networks and that too at a lower cost and to achieve higher throughput.

US patent application "US20160302200A1" discloses a method and an apparatus for communicating over a wireless communication network. One communication device includes a processor configured to allocate, or receive allocation of, at least a portion of a first sub-band of a channel and at least a portion of a second sub-band of the channel for use by the communication device. The communication device further includes a plurality of encoders configured to independently encode first and second data for wireless transmission over the first and second sub-bands, respectively. The communication device further includes a transmitter configured to transmit the independently encoded first and second data over the first and second sub-bands, respectively.

Another prior art "Non-contiguous Channel Bonding for TV White Space Usage with NC-OFDM Transmission: Jianwen Gao, Et. Al." discloses a contiguous channel bonding for using more than one channels together in a TV white space in the IEEE 802.22-specified wireless regional area network system. In order to support more flexible channel usage, the method investigates non-contiguous channel bonding as a potential extended feature of IEEE 802.22 standard. In the method, a transceiver structure with non-contiguous orthogonal frequency-division multiplexing (OFDM) (NC-OFDM) transmission to support non-contiguous channel bonding is presented.

The existing methods disclose about bonding of non-contiguous slots in licensed as well as unlicensed spectrum to create a contiguous channel for allocation. But there exists no method and system disclosing an interference free channel allocation by bonding non-contiguous slots in an unlicensed spectrum based on an interference score.

There is an urgent need for a technical solution that overcomes the above stated limitations in the prior arts and provides an interference free channel allocation by bonding the non-contiguous slots in the unlicensed spectrum based on the interference score. Hence, the present disclosure focuses on providing a contiguous slot in an unlicensed band of radio slots.

### SUMMARY OF THE DISCLOSURE

Embodiments of the present disclosure provide a method and a cloud intelligence engine for providing a contiguous slot in an unlicensed band of radio slots.

According to a first aspect, the method for providing a contiguous slot in an unlicensed band of radio slots comprising steps of selecting a plurality of non-contiguous slots in the unlicensed band of the radio slots, determining an interference score for each of the plurality of non-contiguous slots, creating the contiguous slot by combining at least two non-contiguous slots based on determined interference score and allocating at least two combined non-contiguous slots from the plurality of non-contiguous slots as the contiguous slot.

In particular, at least two combined non-contiguous slots in the unlicensed band of the radio slots have lowest interference scores among the plurality of non-contiguous slots.

According to second aspect of the disclosure, the method further comprising determining the interference score for each of the plurality of non-contiguous slots based on at least one interference key performance indicator (KPI), scoring each slot based on at least one interference key performance indicator (KPI) at a first time interval, scoring at each slot based on at least one interference key performance indicator (KPI) at a second time interval and calculating a total score for each slot based on scores of each slot at the first time interval and the second time interval.

In accordance with an embodiment of the present disclosure, the first time interval is a current time. And, the second time interval is a historical time before the current time.

According to third aspect of the disclosure, at least one interference key performance indicator (KPI) is determined by at least one of a spectrum analyzer output, a link outage duration count, a syslog data with connection disconnection, retransmission of packet, drop in received signal, and a link utilization.

In accordance with an embodiment of the present disclosure, at least one interference key performance indicator (KPI) is determined by at least one of a spectrum analyzer output, a link outage duration count, a syslog data with connection disconnection, retransmission of packet, drop in received signal, and a link utilization.

According to the fourth aspect of the disclosure, the method further comprising steps of providing a first threshold for interference score for each of the plurality of non-contiguous slots and selecting at least two non-contiguous slots having interference scores above the first threshold, to create the contiguous slot by combining at least two selected non-contiguous slots. In particular, the interference score is determined after every first time interval.

According to the fifth aspect of the disclosure, a number of non-contiguous slots to be combined to create the contiguous slot is based on a channel required by a user of a customer premises equipment. Particularly, a maximum of four non-contiguous slots are combined to create the contiguous slot for allocation.

In accordance with an embodiment of the present disclosure, the non-contiguous slots include at least one of 5 MHz slots, 10 MHz slots, 15 MHz slots, 20 MHz slots, 40 MHz slots, and 60 MHz slots.

According to the sixth aspect of the disclosure, the cloud intelligence engine for providing a contiguous slot in unlicensed band of radio slots includes a processor, a memory and an artificial intelligence (AI) based interference mitigation and avoidance controller

In particular, the memory stores at least one of a slot interference score, an interference key performance indicator (KPI), a current interference level, and a historical interference level.

And, the artificial intelligence (AI) based interference mitigation and avoidance controller is coupled with the processor and the memory configured to select a plurality of non-contiguous slots in the unlicensed band of radio slots, determine an interference score for each of the plurality of non-contiguous slots, create the contiguous slot by combining at least two non-contiguous slots based on determined interference score and allocate at least two combined non-contiguous slots from the plurality of non-contiguous slots as the contiguous slot.

In accordance with an embodiment of the present disclosure, at least two combined non-contiguous slots in the unlicensed band of the radio slots have lowest interference scores among the plurality of non-contiguous slots.

According to seventh aspect of the disclosure, the artificial intelligence (AI) based interference mitigation and avoidance controller is configured to determine the interference score for each of the plurality of non-contiguous slots based on at least one interference key performance indicator (KPI), score each slot based on at least one interference key performance indicator (KPI) at a first time interval, score each slot based on at least one interference key performance indicator (KPI) at a second time interval and calculate a total score for each slot based on scores of each slot at the first time interval and the second time interval.

In accordance with an embodiment of the present disclosure, the first time interval is a current time. And, the second time interval is a historical time before the current time.

According to another aspect of the disclosure, the cloud intelligence engine the artificial_intelligence (AI) based interference mitigation and avoidance controller also provide a first threshold for interference score for each of the plurality of non-contiguous slots and select at least two non-contiguous slots having interference scores above the first threshold, to create the contiguous slot by combining at least two selected non-contiguous slots. In particular, the interference score is determined after every first time interval.

In accordance with an embodiment of the present disclosure, a number of non-contiguous slots to be combined to create the contiguous slot is based on a channel required by a user of a customer premises equipment. Further, the artificial_intelligence (AI) based interference mitigation and avoidance controller may be configured to allocate at least two combined non-contiguous slots from the plurality of non-contiguous slots as the contiguous slot.

According to another aspect of the present disclosure, the cloud intelligence engine provides an interference free channel allocation in unlicensed spectrum by bonding non-contiguous slots in the unlicensed spectrum based on an interference score. Thus, high bandwidth requirement can be catered using the unlicensed band of the radio slots.

According to yet another aspect of the present disclosure, the cloud intelligence engine dynamically changes a channel without any performance degradation. Moreover, the cloud intelligence engine provides an affordable gigabit wireless broadband solution in the unlicensed band.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a pictorial snapshot illustrating an exemplary overview of a network management system providing a gigabit wireless solution to a plurality of customer premises in accordance with an embodiment of the present invention;
Fig. 2 is a block diagram illustrating a exemplary network management system providing wireless solution in an unlicensed band in accordance with an embodiment of the present invention;
Fig. 3 is a block diagram illustrating the wireless communication network environment for the network management system to provide a gigabit wireless solution in the unlicensed band in accordance with an embodiment of the present disclosure;
Fig. 4 is a block diagram illustrating a cloud intelligence engine in accordance with an embodiment of the present invention;
Fig. 5 is an example illustration in which the cloud intelligence engine creates the contiguous slot by combining two non-contiguous slots based on the determined interference score in accordance with an embodiment of the present invention;
Fig. 6 is a block diagram illustrating an architecture of a base station in accordance with an embodiment of the present disclosure;
Fig. 7 is a flow chart illustrating a method for providing a contiguous slot in the unlicensed band of the radio slots in accordance with an embodiment of the present invention;
Fig. 8 is a flowchart illustrating a method for providing the interference score for each of the plurality of non-contiguous slots in accordance with an embodiment of the present invention.

### REFERENCE LIST

Customer Premises 102a- 102c
Base Station 104
Switch/Convertor 106
Network Management System 108
Cloud Intelligence Engine 202
Spectrum Analyser 204
Customer Premises Equipment 206
Packet Sniffer 208
Packet Sniffer 210
Spectrum Analyser 212
Artificial Intelligence (Ai) Based Interference Mitigation and Avoidance Controller 402
Communicator 404
Memory 406
Processor408
Baseband Processing Block 602
Radio Frequency Block 604
Microcontroller 606
Peripheral Interfaces 608
System-on-chip (Soc) 610
Power 612
Clock 614
2.4 Ghz Tx/Rx 616
First 5.8 Ghz Tx/Rx 618
Second 5.8 Ghz Tx/Rx 620
Third 5.8 Ghz Tx/Rx 622
First Rffe 624
Second Rffe 626
Third Rffe 628
Fourth Rffe 630
Antenna 632

The method and system are illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

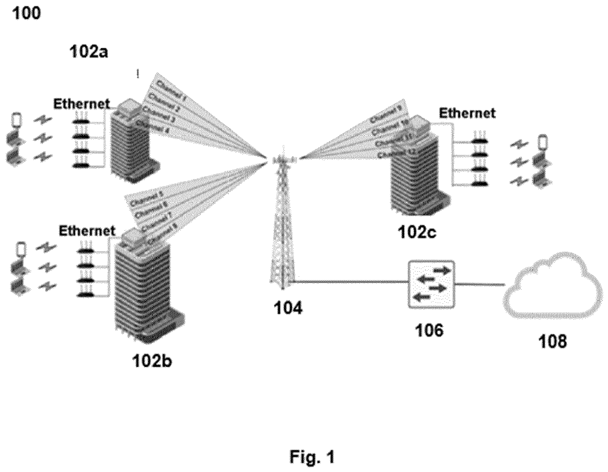

Fig. 1 is a pictorial snapshot illustrating an exemplary overview of a network management system providing a gigabit wireless solution to a plurality of customer premises in accordance with an embodiment of the present disclosure. The exemplary environment (100) is an overview of a network management system (108) providing a gigabit wireless solution to a plurality of customer premises (102a-102c). In Fig. 1 the number of the customer premises are 3. Alternatively, the number of the plurality of customer premises may vary.

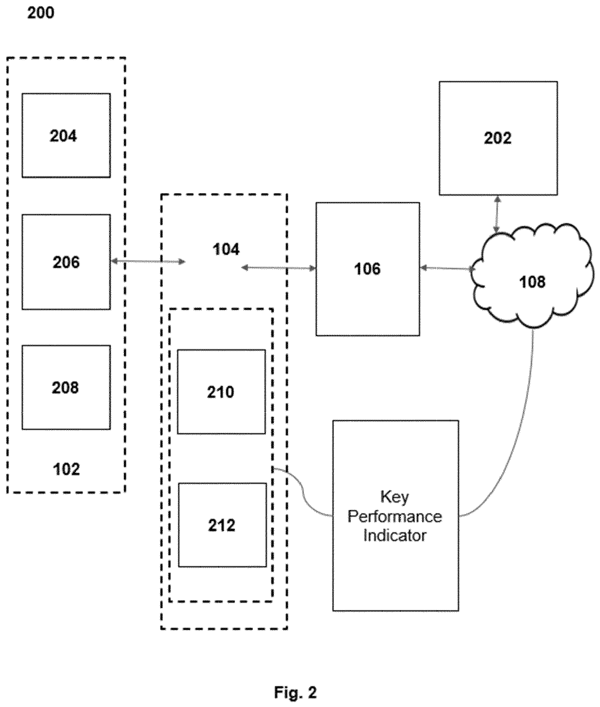

In particular, each of the plurality of customer premises (102a-102c) may include a plurality of customer premises equipment (206) (as shown in the FIG. 2). The plurality of customer premises equipment (206) may include wireless fidelity routers and a multiport Ethernet switch.

The plurality of subscribers may be present inside each of the plurality of customer premises having one or more communication devices. And, each of the one or more communication devices may be a portable communication device. The portable communication device may include, but not limited to, a laptop, a smartphone, a tablet, a palmtop, a flexible device, an Internet of things (loT) device, a smart watch and any wearable communication device.

In alternative embodiments, each of the one or more communication devices may be a fixed communication device. The fixed communication device may include, but not limited to, a desktop, a workstation, a smart television (TV) and a mainframe computer.

Referring to the exemplary environment (100), the plurality of customer premises equipment (206) of each of the plurality of customer premises may be wirelessly connected with a base station (104) through a plurality of channels. Number of the plurality of channels may be 4. Alternatively, the number of the plurality of channels may vary. The base station (104) is configured to communicate with a switch/convertor (106). In particular, the base station (104) and a customer-provided equipment (CPE interface) (not shown) may be interfaced, through air, with the channels chosen as per channel selection techniques.

In an example, the CPE may assign channels to Wi-Fi access points connected to it via an Ethernet and each Wi-Fi access point may serve various users through a wireless interface.

Fig. 2 is a block diagram illustrating a wireless communication network environment (200) in which the network management system (108) provides the gigabit wireless solution in an unlicensed band using a cloud intelligence engine (202). In particular, the wireless communication network environment may include the plurality of customer premises equipment (206), the base station (104) and the switch/convertor (106). In addition, the wireless communication network environment may include the network management system (108) and the cloud intelligence engine (202).

The above stated elements of the wireless communication network environment may operate coherently and synchronously to provide the gigabit wireless solution in the unlicensed band using the cloud intelligence engine (202).

In accordance with an embodiment, the customer premises equipment (206) may be operated with a spectrum analyser (204) and a packet sniffer (208). Particularly, the plurality of customer premises equipment (206) may correspond to a terminal and associated equipment located at the customer premise (102) of corresponding subscriber of a plurality of subscribers. Moreover, the customer premises equipment (206) may include but not limited to telephones, routers, network switches, residential gateways (RG), set-top boxes, fixed mobile convergence products, home networking adapters, Internet access gateways, and the like.

The base station (104) may perform wireless communication with the plurality of customer premises equipment (206). For example, the base station (104) may perform the wireless communication with the customer premises equipment (206) positioned within a cell, which is a communication area of the base station (104). Specifically, the base station (104) may transmit a downlink signal to the plurality of customer premises equipment (206) and may receive an uplink signal from the plurality of customer premises equipment (206).

In an example, the base station (104) may correspond to a base station of a small cell (hereinafter referred to as a "small base station"). In another example, the base station (104) may correspond to a base station of a macro cell (hereinafter referred to as a "macro base station").

Further, the base station (104) and the plurality of customer premises equipment (206) may be operated based on a wireless chipset. In particular, the base station (104) may be capable of bonding at least two channels of the plurality of channels to accommodate higher bandwidth scenarios for the gigabit wireless solution. Moreover, the base station (104) may combine more than two channels chosen on the basis of the proposed method. Furthermore, the base station (104) may include a spectrum analyzer (212) and a sniffer sensor (not shown) to sense the channel condition at the same time. Also, the spectrum analyser (212) may be coupled with a packet sniffer (210).

The network management system (108) may be integrated with the cloud intelligence engine (202). Particularly, the network management system (108) may bond at least two channels of the plurality of channels. In addition, the network management system (108) may work through instructions given by the cloud intelligence engine (202) or embedded programming in the base station (104).

In particular, the network management system (108) may receive the spectrum table from the base station (104) for a pre-configured period of time. Moreover, the pre-configured period of time may be defined by the base station (104). In addition, the network management system (108) may obtain a plurality of key performance indicators (KPI) associated with the base station (104), for example, but not limited to, a Reference Signal Receive Power (RSRP), a Reference Signal Received Quality (RSRQ), a Received Signal Strength Indicator (RSSI), or the like. Further, the network management system (108) may fetch a syslog data from the base station (104).

In accordance with an embodiment of the present disclosure, the cloud intelligence engine (202) may compute the channel/interference score based on analyses of the spectrum table, the plurality of key performance indicators and the syslog data using a plurality of hardware-run procedures. In addition, the cloud intelligence engine (202) may compute the channel/interference score for each of the base stations (104). Further, the cloud intelligence engine (202) may compute the channel/interference score for each of the plurality of channels. The channel/interference score corresponds to a weighted sum of real-time interference level and historic interference level. Alternatively, in order to get an interference score of each base station, the cloud intelligence engine (202) may be installed separately in synchronization with the network management system (108).

The cloud intelligence engine (202) may compute channel/interference score for each of the plurality of channels. In particular, the channel/interference score is a score provided to each of the channel slots signifying the magnitude of interference within each of the channel slots. Moreover, the interference score may denote intensity of channel availability to be allocated for usage by a user of the customer premises equipment (206).

Further, the network management system (108) may trigger switching between the plurality of channels using interference mitigation and avoidance without performance degradation. Also, the network management system (108) may trigger the switching using the switch/convertor (106) based on link specifications and severity of services. Particularly, a trigger mechanism is categorized into a periodic based trigger or an event based trigger.

In an example, the network management system (108) may use the periodic based trigger when combined interference score is summarized over a long period of time and a non-service time (maintenance hour) for minimal service impact. In another example, the network management system (108) may use the event-based trigger if the plurality of channels is flapping due to high outage issue or frequent disconnection.

The trigger mechanism may be configured as per link specifications and severity of services. Further, the trigger mechanism may continuously maintain the connection even for millisecond time for an application (e.g., banking application or the like).

In accordance with an embodiment of the present disclosure, the network management system (108) may alert/notify about the link that has lower than a threshold throughout to initiate one or more proactive maintenance actions. In addition, the network management system (108) may determine a link quality for each of the links of the wireless communication network environment based on real-time RF condition and real-time throughput. Further, the network management system (108) may define a threshold throughout based on the real-time RF condition and the real-time throughput.

In accordance with an embodiment of the present disclosure, the network management system (108) may evaluate the channel/interference score for the plurality of channels at area/cluster level. The evaluation of the channel/interference score for the plurality of channels at the area/cluster level may be based on network design data and changing frequency of any channel. The network design data may include Latitude, longitude, azimuth, Tx power and the like. The evaluation of the channel/interference score for the plurality of channels at the area/cluster level may avoid the possibility of getting any interference through nearby areas/clusters.

In accordance with an embodiment of the present disclosure, the cloud intelligence engine (202) may select the plurality of non-contiguous slots in the unlicensed band of the radio slots. The plurality of non-contiguous slots may be, for example, but not limited to, 5 MHz slots, 10 MHz slots, 15 MHz slots, 20 MHz slots, 40 MHz slots, and 60 MHz slots. After selecting the plurality of non-contiguous slots in the unlicensed band of the radio slots, the cloud intelligence engine (202) may determine the interference score for each of the plurality of non-contiguous slots. The interference score may be determined after every first time interval.

Based on the determined interference score, the cloud intelligence engine (202) may create the contiguous slot by combining at least two non-contiguous slots. The contiguous slot may be a combination of two or more channel slots which are free from interference. In particular, the contiguous slot may act as a continuous channel which may be allocated to a consumer service provider for consumption as a continuous channel. Further, the cloud intelligence engine (202) may allocate at least two combined non-contiguous slots from the plurality of non-contiguous slots as the contiguous slot. The at least two non-contiguous slots in the unlicensed band of the radio slots may have lowest interference scores among the plurality of non-contiguous slots.

In accordance with an embodiment of the present disclosure, the cloud intelligence engine (202) may determine the interference score for each of the plurality of non-contiguous slots based on at least one interference key performance indicator (KPI), score each slot based on at least one interference KPI at a first time interval, score each slot based on at least one interference KPI at a second time interval, and calculate a total score for each slot based on the scores of each slot at the first time interval and the second time interval.

Particularly, the first time interval may be the current time and the second time interval may be a historical time before the current time.

Further, the cloud intelligence engine (202) may provide a first threshold for interference score for each of the plurality of non-contiguous slots. Further, the cloud intelligence engine (202) may select at least two non-contiguous slots having interference scores above the first threshold to create the contiguous slot by combining the selected at least two non-contiguous slots.

In accordance with an embodiment of the present disclosure, the cloud intelligence engine (202) may compute interference scores for each slot periodically using AI (artificial intelligence) based techniques. Based on the computed score, the cloud intelligence engine (202) may assign non-contiguous slots with minimum interference score.

Further, the cloud intelligence engine (202) may provide a high bandwidth application use case with realization of 40 MHz/80 MHz of system bandwidth, however aggregation of smaller discontinuous bands like 5 MHz /10 MHz /15 MHz may also be possible. Based on the proposed method, high bandwidth may be achieved through non-contiguous cloud based channel bonding solutions. In an example, the cloud intelligence engine (202) may bond four independent streams. In the proposed method, the data transmission and channel sensing may be performed at same time. The cloud intelligence engine (202) may change the channel without any performance degradation.

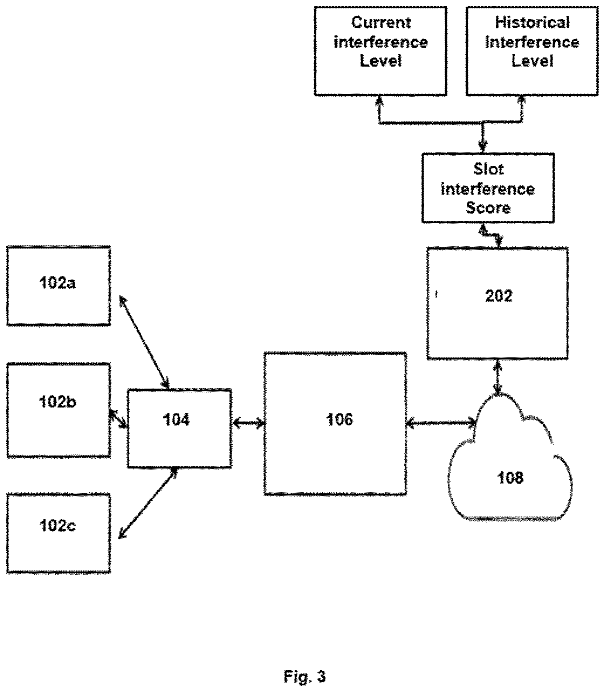

Fig. 3 is a block diagram illustrating the wireless communication network environment for the network management system to provide a gigabit wireless solution in the unlicensed band in accordance with an embodiment of the present disclosure. In particular, the network management system (108) provides the gigabit wireless solution in the unlicensed band using the cloud intelligence engine (202) based on the slot interference score. The operations and functions of the network management system (108) and the cloud intelligence engine (202) are explained in conjunction with FIG. 2.

In accordance with an embodiment of the present disclosure, the cloud intelligence engine (202) may evaluate the channel/interference score for each of the plurality of channels based on two levels. Particularly, the two levels may include the real-time interference level and the historic interference level.

In particular, the evaluation of the channel/interference score for the real-time interference level may be based on the plurality of key performance indicators. The plurality of key performance indicators may include output of the spectrum analyser (212), link outage duration count, and the syslog data with connection disconnection. In addition, the plurality of key performance indicators may include retransmission of packet, drop in received signal, link utilization and the like.

And, evaluation of the channel/interference score for the historic interference level may be based on a plurality of factors including past interference trend, aggregation of the historic data using a proprietary machine-learning algorithm and baselines for each of the plurality of channels. The baselines for each of the plurality of channels may be defined so that indexing of each of the plurality of key performance indicators is measured.

In an example, the baselines may be defined for each slot to measure indexing of each KPI and correct score may be provided to get a final score. And, the network design data may be a combination of lat/long, azimuth and distance and appropriate channel indexing may be determined based on that cluster.

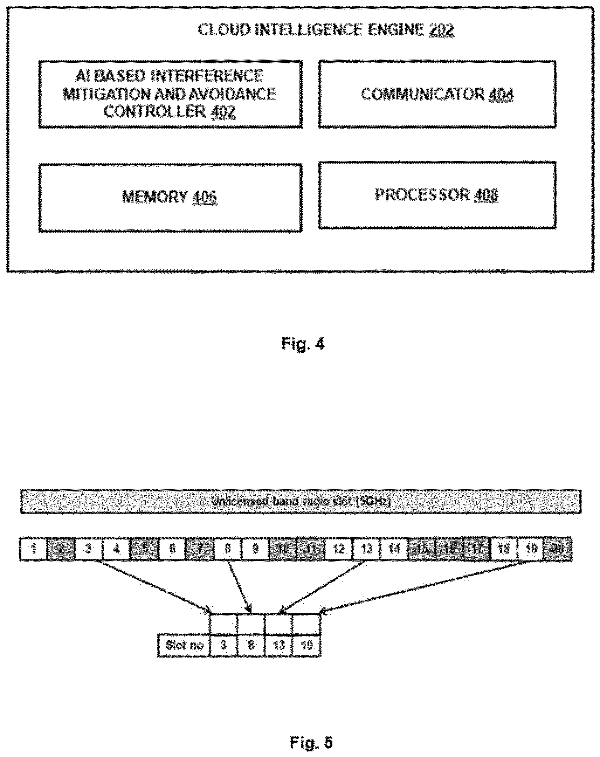

Fig. 4 is a block diagram illustrating a cloud intelligence engine in accordance with an embodiment of the present disclosure. In particular, the cloud intelligence engine (202) may include an artificial intelligence (AI) based interference mitigation and avoidance controller (402), a communicator (404), a memory (406), and a processor (408). The processor (408) may be coupled with the artificial intelligence (AI) based interference mitigation and avoidance controller (402), the communicator (404) and the memory (406).

In accordance with an embodiment of the present disclosure, the artificial intelligence (AI) based interference mitigation and avoidance controller (402) may select the plurality of non-contiguous slots in the unlicensed band of the radio slots. After selecting the plurality of non-contiguous slots in the unlicensed band of the radio slots, the artificial intelligence (AI) based interference mitigation and avoidance controller (402) may determine the interference score for each of the plurality of non-contiguous slots. Based on the determined interference score, the artificial intelligence (AI) based interference mitigation and avoidance controller (402) may create the contiguous slot by combining at least two non-contiguous slots. The contiguous slot may be a combination of two or more channel slots which are free from interference. The contiguous slot may act as a continuous channel which may be allocated to the consumer service provider for consumption as a continuous channel. Further, the artificial intelligence (AI) based interference mitigation and avoidance controller (402) may allocate at least two combined non-contiguous slots from the plurality of non-contiguous slots as the contiguous slot. The at least two non-contiguous slots in the unlicensed band of radio slots may have the lowest interference scores among the plurality of non-contiguous slots.

In accordance with an embodiment of the present disclosure, the artificial intelligence (AI) based interference mitigation and avoidance controller (402) may determine the interference score for each of the plurality of non-contiguous slots based on at least one interference key performance indicator (KPI). Further, the artificial intelligence (AI) based interference mitigation and avoidance controller (402) may score each slot based on at least one interference KPI at the first time interval. The first time interval may be the current time. Further, the artificial intelligence (AI) based interference mitigation and avoidance controller (402) may score each slot based on at least one interference KPI at the second time interval. The second time interval may be the historical time before the current time. Further, the artificial intelligence (AI) based interference mitigation and avoidance controller (402) may calculate the total score for each slot based on the scores of each slot at the first time interval and the second time interval.

Alternatively, the artificial intelligence (AI) based interference mitigation and avoidance controller (402) may determine the interference score for each of the plurality of non-contiguous slots based on at least one interference KPI. Further, the artificial intelligence (AI) based interference mitigation and avoidance controller (402) may score each slot based on at least one interference KPI at the first time interval. The first time interval may be the current time. Further, the artificial intelligence (AI) based interference mitigation and avoidance controller (402) may score each slot based on at least one interference KPI at the plurality of second time intervals. The plurality of second time intervals may include the plurality of historical time intervals before the current time. Further, the artificial intelligence (AI) based interference mitigation and avoidance controller (402) may calculate the total score for each slot based on the scores of each slot at the first time interval and the plurality of second time intervals.

In accordance with an embodiment of the present disclosure, the artificial intelligence (AI) based interference mitigation and avoidance controller (402) may provide the first threshold for the interference score for each of the plurality of non-contiguous slots. Further, the artificial intelligence (AI) based interference mitigation and avoidance controller (402) may select at least two non-contiguous slots having the interference scores above the first threshold, to create the contiguous slot by combining the selected at least two non-contiguous slots.

Particularly, the artificial intelligence (AI) based interference mitigation and avoidance controller (402) may be implemented by analog or digital circuits such as logic gates, integrated circuits, microprocessors, microcontrollers, memory circuits, passive electronic components, active electronic components, optical components, hardwired circuits, or the like, and may optionally be driven by firmware.

The processor (408) may be configured to execute instructions stored in the memory (406) and to perform various processes. And, the communicator (404) may be configured for communicating internally between internal hardware components and with external devices via one or more networks. Further, the memory (406) may store instructions to be executed by the processor (408) and also store the interference score, the interference KPI, the current interference level, the historical interference level, and the slot interference score.

In accordance with an embodiment of the present disclosure, the current interference level may be determined by one or more the spectrum analyser output, the link outage duration count, the syslog data with connection disconnection, the retransmission of packet, the drop in received signal, and the link utilization. Further, the historical interference level may provide past interference trends. And, the historical interference level may be used for baseline for interference for each channel slot.

At least one of the plurality of modules may be implemented through an AI model. A function associated with AI may be performed through the non-volatile memory, the volatile memory, and the processor. The processor (408) may include one or more processors. The one or more processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU).

The one or more processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself, and/or may be implemented through a separate server/system.

The AI model may consist of a plurality of neural network layers. Each layer has a plurality of weight values and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

In accordance with an embodiment of the present disclosure, the artificial intelligence (AI) based interference mitigation and avoidance controller (402) may be used to perform interference free, throughput aware dynamic channel allocation by selecting non-contiguous slots out of complete spectrum and then channel bonding using a standard radio unit architecture modified to support unlicensed band channels. Also, the artificial intelligence (AI) based interference mitigation and avoidance controller (402) may compute the interference score for each slot periodically using AI based techniques. And, based on the computed score, the artificial intelligence (AI) based interference mitigation and avoidance controller (402) assigns non-contiguous slots with the minimum interference score.

Although FIG. 4 shows various hardware components of the cloud intelligence engine (202) but it is to be understood that other alternatives are not limited thereon. In other implantations, the cloud intelligence engine (202) may include less or more number of components. Further, the labels or names of the components are used only for illustrative purposes and does not limit the scope of the disclosure. One or more components can be combined together to perform the same or substantially similar function in the cloud intelligence engine (202).

Fig. 5 is an example illustration in which the cloud intelligence engine creates the contiguous slot by combining two non-contiguous slots based on the determined interference score in accordance with an embodiment of the present disclosure. In particular, the cloud intelligence engine (202) may select four non-contiguous slots (e.g., slot 3, slot 8, slot 13, and slot 19) and bond the four non-contiguous slots to create a 40MHz/80MHz/160MHz channel resulting in an increased throughput performance.

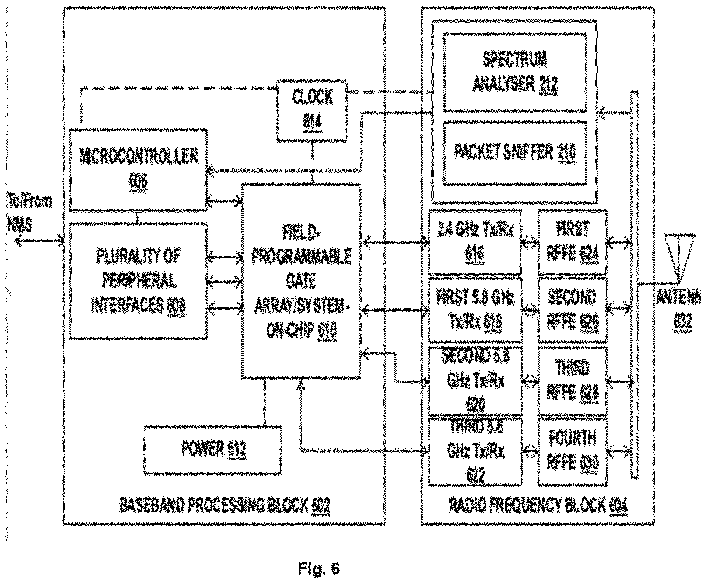

Fig. 6 is a block diagram illustrating an architecture of a base station in accordance with an embodiment of the present disclosure. Particularly, the base station (104) includes an antenna (632), the spectrum analyser (212) and the packet sniffer (210) for spectrum sensing configured in receive mode to capture the complete unlicensed band spectrum. Moreover, the base station (104) supports any 4 independent streams across the unlicensed bands. Further, the baseband processing block (602) and the radio frequency block (604) generate the spectrum table in an embedded random-access memory that is sent to the cloud intelligence engine (202).

Further, the base station (104) includes a baseband processing block (602) and a radio frequency block (604) that have embedded features to generate spectrum tables at a pre-configured period of time.

In an example, the pre-configured period of time to generate a spectrum table by is one minute.

In particular, the baseband processing block (602) and the radio frequency block (604) may be configured for instant channel change with the plurality of channels in case of any severe interference case or outage. Moreover, the radio frequency block (604) may include radio protocols and the spectrum analyser (212). Further, the radio frequency block (604) utilizes the radio protocols to facilitate communication through the antenna (632).

The spectrum analyser (212) facilitates dynamic spectrum optimization with information from the base station (104). With the information, the spectrum analyzer (212) may optimize local spectrum by informing the base station (104) to avoid channels that may be subjected to the interference.

In an example, the radio protocols may include simple network management protocol version 3 (hereinafter referred to as a "SNMPV3". The SNMPV3 is used in a user datagram protocol (UDP) layer/ a transmission control protocol (TCP) layer to send the spectrum table to the cloud intelligence engine (202). Further, the SNMPV3 signals communications between the plurality of customer premises equipment (206) and the network management system (108).

In another example, the radio protocols may include capture aware channel access protocol. In addition, the capture aware channel access protocol may be used if capacity is limited for link due to the usage of the SNMPV3. The capture aware channel access protocol may facilitate sensing of channel condition and data transmission of the plurality of channels simultaneously.

The base station (104) may include a router. In particular, the router corresponds to a device that transfers data packets between computer networks. The router has an application of access, core and distribution. The router is compatible to run Linux-based firmware. The Linux-based firmware includes Tomato, OpenWrt and DD-WRT. The Linux-based firmware embeds the radio protocols and a plurality of embedded features. The plurality of embedded features is used to support Gigabit connectivity requirements. The plurality of embedded features includes antenna technology like multiuser, multiple input, multiple output (Mu-MIMO), 256 Quadrature Amplitude Modulation (QAM), Adaptive Modulation and Beam forming. The base station (104) may include a bonding driver.

The bonding driver may be used to achieve an optimal latency requirement. The optimal latency requirement may be less than 1 millisecond. Alternatively, the optimal latency requirement may vary.

In an alternate embodiment, the base station (104) may include the baseband processing block (602) and the radio frequency block (604), both provided as separate chips or distinct physical units. The baseband processing block (602) may include a microcontroller (606) and a plurality of peripheral interfaces (608) that complement the radio frequency block (604). The plurality of peripheral interfaces (608) include but may not be limited to a double data rate (DDR) interface, an Ethernet interface, and a universal asynchronous receiver/transmitter interface. The radio frequency block (604) may have a transmit path for transmitting a transmit signal. The radio frequency block (604) may include a first RFFE (624), a second RFFE (626), a third RFFE (628) and a fourth RFFE (630). Each of the first RFFE (624), the second RFFE (626), the third RFFE (628) and the fourth RFFE (630) may correspond to radio frequency front end circuits that have amplification circuitry for the transmitted and received signals. Each of the first RFFE (624), the second RFFE (626), the third RFFE (628) and the fourth RFFE (630) may include a power amplifier and a low noise amplifier.

The power amplifier and the low noise amplifier of the first RFFE (624) may specifically be tuned for a 2.4 GHz Tx/Rx (616). The power amplifier and the low noise amplifier of the second RFFE (626) may specifically be tuned for a first 5.8 GHz Tx/Rx (618). The power amplifier and the low noise amplifier of the third RFFE (628) may specifically be tuned for a second 5.8 GHz Tx/Rx (620). The power amplifier and the low noise amplifier of the fourth RFFE (630) may specifically be tuned for a third 5.8 GHz Tx/Rx (622). The transmit signal may be amplified by the power amplifier prior to transmission over the antenna (632). More transmit paths may be provided for more transmit channels/bands, depending on the application.

The baseband processing block (602), having various radio frequency (RF) functions, may typically be implemented on a field-programmable gate array (FPGA) or a system-on-chip (SoC) (610). The baseband processing block (602) may include heavy duty or highly intensive digital functions, which processes a digital signal prior to providing the digital signal to the radio frequency block (604). The baseband processing block (602) includes a power (612) and a clock (614). Generally, wider bandwidth means higher amount of data traffic, wider serial link, and faster the interface has to be clocked. The microcontroller (606) may control power levels for closed-loop system operation of the baseband processing block (602).

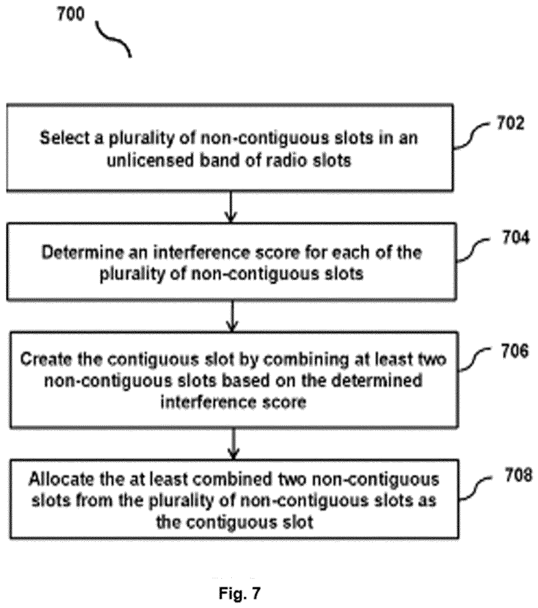

Fig. 7 is a flow chart illustrating a method for providing a contiguous slot in the unlicensed band of the radio slots in accordance with an embodiment of the present disclosure. The steps (702-708) are performed by the artificial intelligence (AI) based interference mitigation and avoidance controller (402).

In particular, the method may be used to perform interference free, throughput aware dynamic channel allocation by selecting non-contiguous slots out of complete spectrum and then channel bonding using the standard radio unit architecture modified to support the unlicensed band channels. Moreover, the cloud intelligence engine (202) may compute interference score for each slot periodically using AI based techniques. Based on the computed score, the cloud intelligence engine (202) may assign the non-contiguous slots with the minimum interference score. In the proposed method, allocation of channel slots with low interference or no interference is achieved. Further, high bandwidth requirement may be catered using the unlicensed band of the radio slots.

The method starts at step 702. At step 702, the plurality of non-contiguous slots is selected in the unlicensed band of the radio slots.

At step 704, the interference score for each of the plurality of non-contiguous slots is determined.

At step 706, the contiguous slot is created by combining two or more non-contiguous slots based on the determined interference score.

At step 708, at least two or more combined non-contiguous slots from the plurality of non-contiguous slots are allocated as the contiguous slot.

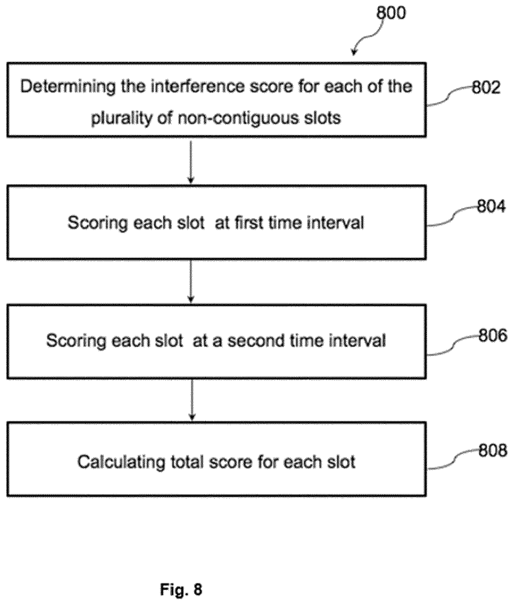

Fig. 8 is a flowchart illustrating a method for providing the interference score for each of the plurality of non-contiguous slots in accordance with an embodiment of the present invention. The method 800 starts at step 802. At step 802, the interference score for each of the plurality of non-contiguous slots is determined based on at least one interference key performance indicator (KPI).

At step 804, each slot is scored based on at least one interference key performance indicator (KPI) at a first time interval. The first time interval is the current time.

At step 806, each slot is scored based on at least one interference key performance indicator (KPI) at a second time interval. And, the second time interval is a historical time before the current time.

At step 808, a total score is calculated for each slot based on scores of each slot at the first time interval and the second time interval.

It may be noted that the flowchart is explained to have above stated process steps, however, those skilled in the art would appreciate that the method 700 and method 800 may have more/less number of process steps which may enable all the above stated embodiments of the present invention.

The various actions, acts, blocks, steps, or the like in the flow chart may be performed in the order presented, in a different order or simultaneously. Further, in some embodiments, some of the actions, acts, blocks, steps, or the like may be omitted, added, modified, skipped, or the like without departing from the scope of the disclosure.

The embodiments disclosed herein can be implemented using at least one software program running on at least one hardware device and performing network management functions to control the elements.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or non-volatile memory (e.g., magnetic disk storage, optical storage, EEPROM and/or solid state RAM)

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components.

It is to be understood that the terms so used are interchangeable under appropriate circumstances and embodiments of the disclosure are capable of operating according to the present disclosure in other sequences, or in orientations different from the one(s) described or illustrated above.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the disclosure will be apparent to those skilled in the art from consideration of the specification and practice of the disclosure. While the foregoing written description of the disclosure enables one of ordinary skill to make and use what is considered presently to be the best mode thereof, those of ordinary skill will understand and appreciate the existence of variations, combinations, and equivalents of the specific embodiment, method, and examples herein. The disclosure should therefore not be limited by the above described embodiment, method, and examples, but by all embodiments and methods within the scope of the disclosure. It is intended that the specification and examples be considered as exemplary, with the true scope of the disclosure being indicated by the claims.

The results of the disclosed methods may be stored in any type of computer data repository, such as relational databases and flat file systems that use volatile and/or non-volatile memory (e.g., magnetic disk storage, optical storage, EEPROM and/or solid state RAM)

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined.

The foregoing descriptions are merely specific implementations of the present disclosure but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for providing a contiguous slot in an unlicensed band of radio slots **characterized in that**:
selecting, by a cloud intelligence engine (202), a plurality of non-contiguous slots in the unlicensed band of the radio slots;
determining, by the cloud intelligence engine (202), an interference score for each of the plurality of non-contiguous slots;
creating, by the cloud intelligence engine (202), the contiguous slot by combining at least two non-contiguous slots based on determined interference score; and
allocating, by the cloud intelligence engine (202), an at least two combined non-contiguous slots from the plurality of non-contiguous slots as the contiguous slot;
wherein the at least two combined non-contiguous slots in the unlicensed band of the radio slots have lowest interference scores among the plurality of non-contiguous slots.

2. The method as claimed in claim 1, wherein the method further comprising:
determining, by the cloud intelligence engine (202), the interference score for each of the plurality of non-contiguous slots based on an at least one interference key performance indicator (KPI);
scoring, by the cloud intelligence engine (202), each slot based on the at least one interference key performance indicator (KPI) at a first time interval, wherein the first time interval is a current time;
scoring, by the cloud intelligence engine (202), each slot based on the at least one interference key performance indicator (KPI) at a second time interval, wherein the second time interval is a historical time before the current time; and
calculating, by the cloud intelligence engine (202), a total score for each slot based on scores of each slot at the first time interval and the second time interval;

3. The method as claimed in claim 2, wherein the at least one interference key performance indicator (KPI) is determined by at least one of a spectrum analyzer output, a link outage duration count, a syslog data with connection disconnection, retransmission of packet, drop in received signal, and a link utilization.

4. The method as claimed in claim 1 or 2, wherein the method further comprising:
providing, by the cloud intelligence engine (202), a first threshold for interference score for each of the plurality of non-contiguous slots; and
selecting, by the cloud intelligence engine (202), the at least two non-contiguous slots having interference scores above the first threshold, to create the contiguous slot by combining at least two selected non-contiguous slots; wherein the interference score is determined after every first time interval.

5. The method as claimed in any preceding claim, wherein the plurality of non-contiguous slots includes at least one of 5 MHz slots, 10 MHz slots, 15 MHz slots, 20 MHz slots, 40 MHz slots, and 60 MHz slots.

6. The method as claimed in any preceding claim, wherein a maximum of four non-contiguous slots are combined to create the contiguous slot for allocation.

7. A cloud intelligence engine (202) for providing a contiguous slot in unlicensed band of radio slots, **characterized by**:
a processor (408);
a memory (406) storing at least one of a slot interference score, an interference key performance indicator (KPI), a current interference level, and a historical interference level; and
an artificial intelligence (AI) based interference mitigation and avoidance controller (402), coupled with the processor (408) and the memory (406) configured to:
select a plurality of non-contiguous slots in the unlicensed band of radio slots;
determine an interference score for each of the plurality of non-contiguous slots;
create the contiguous slot by combining at least two non-contiguous slots based on determined interference score; and
allocate an at least two combined non-contiguous slots from the plurality of non-contiguous slots as the contiguous slot.

8. The cloud intelligence engine (202) as claimed in claim 7, wherein the at least two combined non-contiguous slots in the unlicensed band of the radio slots have lowest interference scores among the plurality of non-contiguous slots.

9. The cloud intelligence engine (202) as claimed in claim 7 or 8, wherein the artificial intelligence (AI) based interference mitigation and avoidance controller (402) is configured to:
determine the interference score for each of the plurality of non-contiguous slots based on an at least one interference key performance indicator (KPI);
score each slot based on the at least one interference key performance indicator (KPI) at a first time interval, wherein the first time interval is a current time;
score each slot based on the at least one interference key performance indicator (KPI) at a plurality of second time intervals, wherein the plurality of second time intervals includes a plurality of historical time intervals before the current time; and
calculate a total score for each slot based on scores of each slot at the first time interval and the second time interval.

10. The cloud intelligence engine (202) as claimed in claim 7 to 9, wherein the artificial intelligence (AI) based interference mitigation and avoidance controller (402) is configured to provide a first threshold for interference score for each of the plurality of non-contiguous slots and select the at least two non-contiguous slots having interference scores above the first threshold, to create the contiguous slot by combining at least two selected non-contiguous slots.

11. The cloud intelligence engine (202) as claimed in claim 7 to 10, wherein the interference score is determined after every first time interval.

12. The cloud intelligence engine (202) as claimed in claim 7 to 11, wherein a number of non-contiguous slots to be combined to create the contiguous slot is based on a channel required by a user of a customer premises equipment (206).

13. The cloud intelligence engine (202) as claimed in claim 7 to 12, wherein the plurality of non-contiguous slots includes at least one of 5 MHz slots, 10 MHz slots, 15 MHz slots, 20 MHz slots, 40 MHz slots, and 60 MHz slots.

14. The cloud intelligence engine (202) as claimed in claim 7 to 13, wherein a maximum of four non-contiguous slots are combined to create the contiguous slot for allocation.

15. The cloud intelligence engine (202) as claimed in claim 9, wherein the at least one interference key performance indicator (KPI) is determined by at least one of a spectrum analyzer output, a link outage duration count, a syslog data with connection disconnection, retransmission of packet, drop in received signal, and a link utilization.
